# EUROPÄISCHE PATENTSCHRIFT

(11) **EP 1 631 436 B1**
(45) Veröffentlichungstag und Bekanntmachung des Hinweises auf die Patenterteilung: **22.02.2017**
(21) Anmeldenummer: 04732114.6
(22) Anmeldetag: 11.05.2004
(51) Int. Cl.: B29C 47/90

(54) **KALIBRIEREINRICHTUNG**
CALIBRATING DEVICE
DISPOSITIF DE CALIBRAGE

(30) Priorität: 24.05.2003 DE 10323543
(43) Veröffentlichungstag der Anmeldung: 08.03.2006
(73) Patentinhaber: KraussMaffei Technologies GmbH, 80997 München (DE)
(72) Erfinder: STIEGLITZ, Henning, 32425 Minden (DE); Dipl.-Ing. Aron ALTMANN, 80805 München (DE)
(74) Vertreter: Roider, Stephan
(86) Internationale Anmeldenummer: PCT/EP2004/005024
(87) Internationale Veröffentlichungsnummer: WO 2004/103684

(56) Entgegenhaltungen:
- DE-A- 2 359 975
- DE-A- 10 222 922
- DE-A- 19 843 340
- US-A- 2 423 260
- US-A- 5 316 459

## Beschreibung

Die Erfindung betrifft eine Kalibriereinrichtung gemäß dem Oberbegriff des Anspruchs 1 oder des Anspruchs 2.

Kalibriereinrichtungen werden beispielsweise zur Kalibrierung von extrudierten Endlosprofilen, insbesondere Rohren, verwendet. Dabei wird in einem Extruder zunächst eine Kunststoffschmelze aufbereitet, welche durch eine Austrittsdüse formgebend bearbeitetet wird. Zur Sicherstellung der gewünschten Dimensionierung des Endlosprofils, durchläuft dieses nach der Formgebung die Kalibriereinrichtung, in der es dimensionsgenau geformt wird.

Bei der Herstellung von Kunststoffrohren war es bis vor einiger Zeit notwendig, für unterschiedliche Wanddicken oder Außendurchmesser, verschiedene Kalibriereinrichtungen zur Verfügung zu stellen. Dazu mussten die entsprechenden Teile ausgewechselt werden, was ein Stillsetzen der Maschine erforderte und damit zu Ausfallzeiten führte.

In der DE 198 43 340 C2 ist daher vorgeschlagen, eine einstellbare Kalibriereinrichtung für unterschiedliche Rohrdimensionen zu verwenden. Diese Kalibriereinrichtung besteht beispielsweise aus einer Vielzahl von Lamellen, die an der Außenseiten des zu kalibrierenden Rohrs über den Umfang verteilt und im Abstand zueinander angeordnet sind. In Produktionsrichtung des Rohres gesehen, sind eine Vielzahl solcher Lamellenkränze innerhalb einer Kalibrierstation angeordnet, wobei die einzelnen Lamellen der einzelnen Lamellenkränze auf Lücke zueinander stehen, so dass eine problemlose Verstellung der einzelnen Lamellen des einzelne Kranzes gegenüber den Lamellen des nachfolgenden Kranzes oder des vorhergehenden Kranzes möglich ist. Die Lamellen der bekannten Kalibriereinrichtung sind segmentweise zu einem Lamellenblock zusammengefasst und von einer Haltekonstruktion getragen. Die Haltekonstruktion wiederum ist mit dem Gehäuse in radial verstellbarer Weise verbunden.

Problematisch bei dieser Ausführungsform der bekannten Kalibriereinrichtung ist jedoch die Auffädelung der einzelnen Segmente auf Stangen, wobei zwischen den Segmenten geschliffene Hülsen einzusetzen sind. Diese Hülsen gewährleisten einen gleichbleibenden Abstand zwischen den Segmenten. Die Konstruktion erfordert jedoch eine langwierige und damit kostenintensive Montage. Darüber hinaus summieren sich unvermeidbare Fertigungstoleranzen auf, was dazu führen kann, dass die Position der Segmentträger unzulässig stark abweichen. Im Extremfall lassen sich die Segmentblöcke dann nicht in den Kalibrierkorb montieren, was wiederum eine Nachbesserung erfordert.

DE 24 12 818 A beschreibt eine Kalibriervorrichtung für einen konstanten Rohrdurchmesser mit zwei Gruppen ineinandergreifender Kalibrierlamellen, die zum Einlegen eines extrudierten Rohrstranges seitlich auseinander geschwenkt werden können. Ein veränderlicher Kalibrierdurchmesser während des Betriebs ist damit nicht realisierbar.

Aufgabe der vorliegenden Erfindung ist es, eine Kalibriereinrichtung zur Verfügung zu stellen, die einfach aufgebaut und leicht montierbar ist und bei der übermäßige Fertigungstoleranzen vermieden werden können.

Diese Aufgabe wird durch die im Anspruch 1 oder im Anspruch 2 angegebenen Merkmale gelöst.

Ein Grundgedanke der vorliegenden Erfindung ist es, die Segmentkörper jeweils aus einem Werkstück herzustellen. Die Segmentkörper können dann mit einer innenseitig fertigen Kontur für die Kalibrieröffnung ausgebildet werden. Alternativ ist es möglich, innenseitig separate Teile zur Ausbildung der Kontur für die Kalibrieröffnung anzuordnen.

Es gibt vielfältige Möglichkeiten, den Segmentkörper einstückig herzustellen bzw. auszubilden. So kann der Segmentkörper aus einem Stück gefräst werden. Der Rohling kann beispielsweise aus Metall bestehen und in einer Form gegossen werden. Natürlich ist auch die Verwendung anderer Materialien, wie Kunststoff, für den Segmentkörper möglich. Die später innenliegende Kontur für die Kalibrieröffnung kann wiederum direkt in dem Werkstück selbst ausgebildet werden. So ist es möglich, die entsprechend bearbeitete Innenfläche geeignet zu beschichten, so dass eine möglichst reibungsfreie und verschleißfeste Oberfläche gegeben ist. Es ist auch möglich, eine Art Lamellenstruktur oder eine andere Struktur durch Einfräsen von Nuten in das Werkstück zu erzeugen.

Alternativ ist es möglich, an das Werkstück separate Konturelemente anzubringen. Beispielsweise können in einem Kunststoffkörper Metallelemente, insbesondere halbmondförmige Lamellen, eingesetzt werden.

Wesentlich bei der vorliegenden Erfindung ist der im wesentlichen einstückige Segmentkörper, der eine einfache, schnelle und montagefreundliche Herstellung ermöglicht.

Die Erfindung wird nachfolgend mit Bezug auf die beigelegten Zeichnungen näher erläutert. Die Zeichnungen zeigen in:
- **Fig.1:**: eine schematische Schnittdarstellung einer Ausführungsform einer bekannten Kalibriereinrichtung senkrecht zur Produktionsrichtung eines Rohres,
- **Fig. 2:**: eine Kalibriereinrichtung wie in Fig. 1 in schematischer Schnittansicht parallel zur Produktionsrichtung,
- **Fig. 3:**: einen einzelnen Segmentblock der bekannten Kalibriereinrichtung gemäß den Figuren 1 und 2 in schematisch vereinfachter Darstellung,
- **Fig. 4:**: eine Ausführungsform eines erfindungsgemäßen Segmentes in schematisch vereinfachter Darstellung und
- **Fig**. **5:**: eine weitere Ausführungsform eines erfindungsgemäßen Segmentes in schematisch vereinfachter Darstellung.

Eine vollständige Anordnung einer Vorrichtung zur Herstellung eines Kunststoffrohres kann aus der DE 198 43 340 C2 entnommen werden. In dieser ist eine bereits verstellbare Kalibriereinrichtung dargestellt. Die verstellbare Kalibriereinrichtung ist dabei eine Kernkomponente einer Rohrextrusionsanlage mit Dimensionswechselmöglichkeit. Sie übernimmt die formgebende Aufgabe einer Standardkalibrierung, kann jedoch über den konstruktionsbedingt vorgegebenen Durchmesserbereich stufenlos verstellt werden.

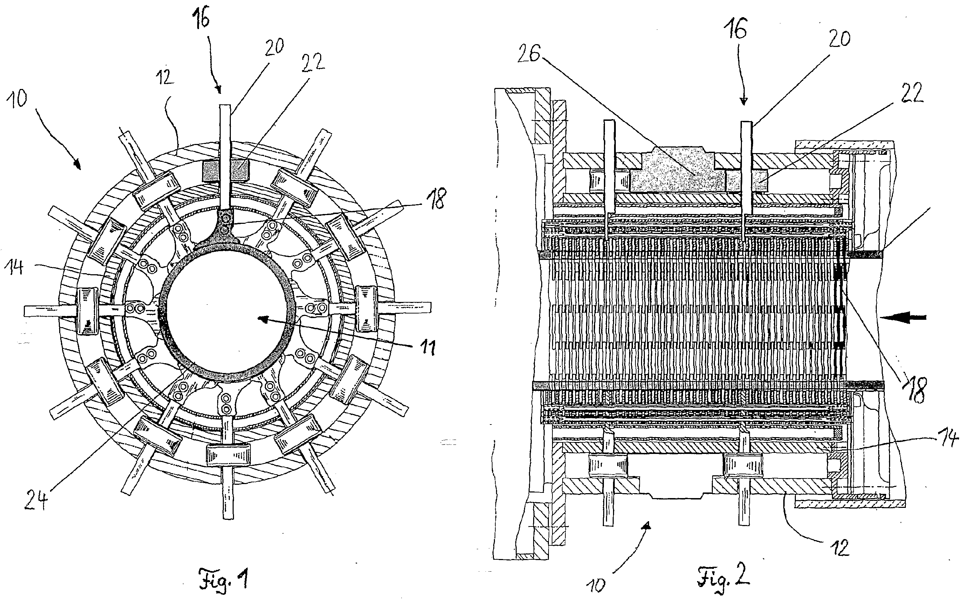

Ermöglicht wird diese Verstellung dadurch, dass die am Rohr anliegende Fläche durch eine große Vielzahl von einzelnen Segmenten gebildet wird. Die in Fig. 1 dargestellten Segmente 18 besitzer dabel entlang ihrer Innenseite, also der Umfangsrichtung des Rohres eine Rundung, die dem größtmöglichen Rohraußendurchmesser entspricht und sind zu einzelnen Segmentabschnitten zusammengefasst. Diese Segmentabschnitte umfassen einzelne Lamellen, die in Produktionsrichtung gesehen, beabstandet sind, jedoch dicht hintereinander liegen. Zwei aufeinander folgende Segmentkränze sind zu einem Dimensionskranz zusammengefasst, welche versetzt auf Lücken zueinander angeordnet sind. Dadurch wird gewährleistet, dass möglichst keinerlel Kanten beim Durchlauf des Rohres durch die Kalibriereinrichtung entstehen. Die einzelnen Segmentoberflächen bilden gemeinsam eine im wesentlichen glatte Rohrinnenfläche mit nahezu kreisrunder Geometrie.

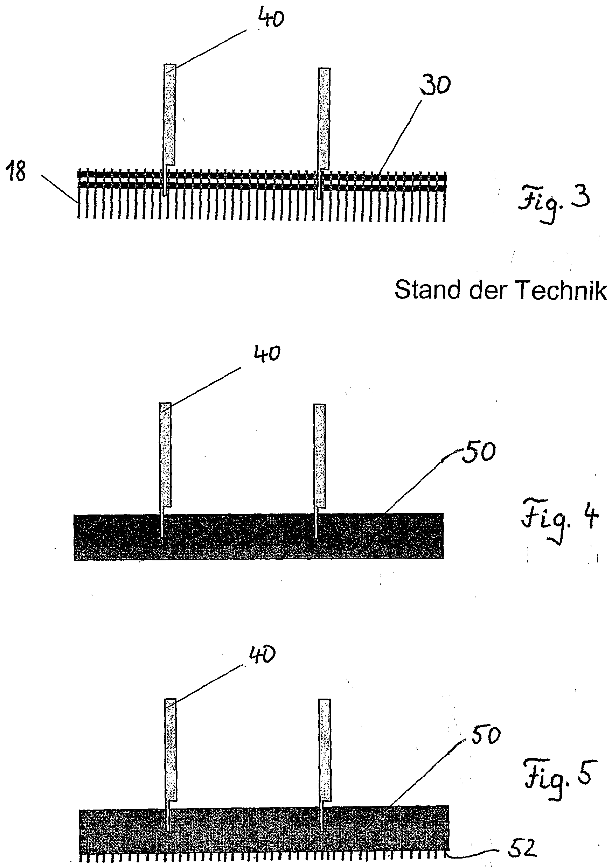

Wie In Fig. 3 zu erkennen ist, sind bei der bekannten Kallbriereinrichtung die In Produktionsrichtung des Rohres axial hintereinander liegenden Segmente 18 zu einem Segmentblock zusammengefasst. Dazu wird eine Trägerstruktur 30 verwendet. Die Trägerstruktur besteht im wesentlichen aus zwei Stangen, auf denen die einzelnen Segmente bzw. Lamellen 18 aufgereiht sind. Die Trägerstruktur 30 ist mit einer Halterung- und Betätigungsvorrichtung 20 verbunden, welche die jeweiligen Segmentblöcke In radial verstellbarer Weise mit dem Gehäuse der Kalibriereinrichtung verbindet. Das Gehäuse der Kalibriereinrichtung besteht beim bekannten Ausführungsbeispiel der Fig. 1 aus zwei koaxial Ineinander angeordneten Zylinderabschnitten 12 und 14. In diesen Zylinderabschnitten sind die einzelnen Segmentblöcke 16 kreisförmig aufgenommen. Ein einzelner - bekannten - Segmentblock der bisher bekannten Ausführungsform ist schematisch In Fig. 3 dargestellt.

Er umfasst hintereinander angeordnete Segment bzw. Lamellen 18, die an den zwei Tragstäben befestigt sind. Die Tragstäbe bilden die Trägerstruktur 30. An den Tragstäben wiederum sind in Axialrichtung beabstandet zwei als Spindelträger dienende Außengewindestäbe 40 angeordnet. Bei einer fertig montierten Kalibriereinrichtung sind die Außengewindestäbe 40 In zugehörigen Bohrungen der Gehäusezylinder 12 und 14 aufgenommen. Zwischen den beiden. Gehäusezylindern 12 und 14 ist für jeden Außengewindestab eine Zahnradmutter 22 vorgesehen, die mit dem Außengewinde des Außengewindestabs 40 in verstellbare Weise zusammenwirkt.

Senkrecht zur Produktionsrichtung des Rohres 24 (vgl. Fig. 1), sind vorliegend 12 Segmentblöcke kreisförmig angeordnet. Jeder Segmentblock besitzt jeweils zwei Spindelträger 20, die axial beabstandet sind (Fig. 2) und jeweils mit einer zugehörigen Zahnradmutter 22 zusammenwirken. Die Zahnradmuttern 22 wiederum werden durch einen Zahnradring 26 der sich umfangsmäßig zwischen den axial beabstandeten Zahnradmuttern 22 erstreckt, gemeinsam verstellt. Dazu besitzt der Zahnradring 26 an seinen beiden Rändern mit den Zahnradmuttern 22 kämmende Zähne.

Durch Betätigung des Zahnradringes 26 können alle Segmentblöcke gleichzeitig und in gleicher Weise radial nach Außen oder Innen verstellt werden. Werden alle Segmentblöcke in gleicher Weise radial verstellt, so ergibt sich ein veränderlicher Kalibrierdurchmesser. Im Bereich der Verstellmöglichkeit lässt sich damit der Außendurchmesser des zu kalibrierenden Rohres 24 definieren.

In den Fig. 4 und 5 sind erfindungsgemäße Ausführungen der Segmente dargestellt. Die erfindungsgemäßen Segmente umfassen nicht - wie beim Stand der Technik - eine Vielzahl von einzelnen Lamellen, sondern sind aus einem Werkstück hergestellt, welches jeweils einen Segmentkörper 50 bildet.

In Fig. 4 ist innenseitig des Segmentkörpers eine Kontur ausgeformt (nicht im einzelnen ersichtlich), die zur Ausbildung der Kalibrieröffnung erforderlich ist. Es kann sich dabei um eine glatte, evtl. beschichtete Oberfläche handeln, die einen gewölbten Rohrsegmentabschnitt darstellt. An deren Seiten können Verzahnungen angeordnet sein, welche die Überlappung der einzelnen benachbart zueinander angeordneten Segmente gewährleisten.

Gemäß einer Ausführungsform können in die Innenfläche des Segmentkörpers auch Strukturen eingearbeitet sein. So ist es möglich, parallel beabstandete Nuten einzubringen, so dass wiederum lamellenartige Vorsprünge innenseitig, allerdings einstückig mit dem Segmentkörper ausgebildet sind. Das Werkstück kann aus Metall gegossen und nachträglich bearbeitet sein. Insbesondere können Oberflächen durch Fräsen ausgebildet werden.

Eine weitere Möglichkeit der Ausbildung des Segmentkörpers ist schematisch in Fig. 5 dargestellt. Hier besteht der Segmentkörper 50 selbst aus Kunststoff, in den an der späteren Innenseite halbmondförmige Metalllamellen eingefügt sind. Diese Ausbildung hat den Vorteil, dass sich der Kunststoff-Segmentkörper 50 relativ kostengünstig und einfach herstellen lässt; die Metalllamellen aber doch widerstandfähig und präzise zu fertigen sind.

Natürlich sind auch andere Möglichkeiten gegeben, den Segmentkörper 50 im wesentlichen einstückig herzustellen und dann die Innenfläche i) entweder am oder im Werkstück selbst auszubilden oder ii) an oder in das Werkstück einzufügen. Ausschlaggebend ist, dass einzelne Lamellen nicht montageaufwendig einzeln aufgereiht werden müssen. Überdies ist es erfindungsgemäß möglich, die einzuhaltende Fertigungstoleranz zu gewährleisten.

### Bezugszeichenliste

- 10: Kalibrierkorb
- 11: Kalibrieröffnung
- 12: Äußerer Gehäusezylinder
- 14: Innerer Gehäusezylinder
- 16: Segmentblock
- 18: Lamellen
- 20: Spindelträger
- 22: Zahnradmutter
- 24: Rohr
- 26: Zahnring
- 30: Lamellenträger
- 40: Außengewindestab
- 50: Segmentkörper
- 52: Metalleinsätze

## Patentansprüche

1. Kalibriereinrichtung zur Kalibrierung von extrudierten Endlosprofilen, insbesondere Rohren, mit einer Kalibrieröffnung (11), die durch eine Vielzahl von umfangsmäßig und axial benachbart hintereinander angeordneten Segmenten gebildet ist, deren Innenoberflächen gemeinsam die Kalibrieröffnung (11) bilden, **dadurch gekennzeichnet, dass**
- die einzelnen, axial benachbart hintereinander angeordneten Segmente jeweils einen einstückigen Segmentkörper (50) bilden,
- die Segmentkörper (50) jeweils aus einem Werkstück hergestellt sind und keine einzelnen, aufgereihten Lamellen umfassen oder dass in die Innenfläche des Segmentkörpers (50) Strukturen so eingearbeitet sind, dass lamellenartige Vorsprünge innenseitig, einstückig mit dem Segmentkörper (50) ausgebildet sind,
- die Segmentkörper (50) im wesentlich kreisförmig derart in einem Gehäuse (12, 14) aufgenommen sind, dass sich axial benachbarte Segmente zur Ausbildung der Kalibrieröffnung (11) in Umfangsrichtung teilweise überlappen,
- jeder Segmentkörper (50) mit zumindest einer Betätigungsvorrichtung (20) verbunden ist, mit der die einzelnen Segmentkörper (50) in dem Gehäuse (12, 14) gehalten sind und eine Verstellung eines jeden einzelnen Segmentkörpers (50) in Radialrichtung vornehmbar ist und
- dass die Segmentkörper (50) innenseitig eine Kontur zur Ausbildung der Kalibrieröffnung aufweisen.

2. Kalibriereinrichtung zur Kalibrierung von extrudierten Endlosprofilen, insbesondere Rohren, mit einer Kalibrieröffnung (11), die durch eine Vielzahl von umfangsmäßig und axial hintereinander angeordneten Segmenten gebildet ist, deren Innenoberflächen gemeinsam die Kalibrieröffnung (11) bilden, **dadurch gekennzeichnet, dass**
- die einzelnen, axial hintereinander angeordneten Segmente jeweils einen einstückigen Segmentkörper (50) bilden,
- die Segmentkörper (50) aus Kunststoff hergestellt sind,
- die Segmentkörper (50) im wesentlich kreisförmig derart in einem Gehäuse (12, 14) aufgenommen sind, dass sich axial benachbarte Segmente zur Ausbildung der Kalibrieröffnung (11) in Umfangsrichtung teilweise überlappen,
- jeder Segmentkörper (50) mit zumindest einer Betätigungsvorrichtung (20) verbunden ist, mit der die einzelnen Segmentkörper (50) in dem Gehäuse (12, 14) gehalten sind und eine Verstellung eines jeden einzelnen Segmentkörpers (50) in Radialrichtung vornehmbar ist,
- die Segmentkörper (50) jeweils aus einem Werkstück hergestellt sind, und
- dass die Segmentkörper (50) innenseitig eine Kontur zur Ausbildung der Kalibrieröffnung aufweisen oder dass innenseitig der Segmentkörper Konturelemente mit einer Kontur zur Ausbildung der Kalibrieröffnung daran oder darin aufgenommen sind.

3. Kalibriereinrichtung nach Anspruch 1 oder 2,
**dadurch gekennzeichnet,**
**dass** die Segmentkörper (50) aus einem Werkstück gefräst sind.

4. Kalibriereinrichtung nach Anspruch 1,
**dadurch gekennzeichnet,**
**dass** die Segmentkörper (50) aus Metall gegossen und nachbearbeitet sind.

5. Kalibriereinrichtung nach Anspruch 2,
**dadurch gekennzeichnet,**
**dass** die die Kontur ausbildenden Flächen aus Metall bestehen, die in den Kunststoffblock eingesetzt sind.

6. Kalibriereinrichtung nach Anspruch 5,
**dadurch gekennzeichnet,**
**dass** Metalleinsätze als Lamellen ausgebildet sind.

7. Kalibriereinrichtung nach Anspruch 6,
**dadurch gekennzeichnet,**
**dass** die Lamellen halbmondförmig ausgebildet sind.

8. Kalibriereinrichtung nach einem der Ansprüche 1 bis 4,
**dadurch gekennzeichnet,**
**dass** in die Segmentkörper (50) innenseitig Nuten eingearbeitet sind.

9. Kalibriereinrichtung nach einem der Ansprüche 1 bis 4,
**dadurch gekennzeichnet,**
**dass** die innenseitigen Konturen der Segmentkörper (50) jeweils eine glatte Oberfläche aufweisen, die einen gewölbten Rohrsegmentabschnitt darstellt.

## Claims

1. A calibrating device for calibrating extruded endless profiles, in particular pipes, with a calibrating aperture (11) which is formed by a plurality of segments arranged circumferentially and axially adjacent one behind the other, the interior surfaces of which jointly form the calibrating aperture (11),
**characterized in that**
- the individual segments, arranged axially adjacent one behind the other, form respectively a one-piece segment body (50),
- the segment bodies (50) are produced respectively from a workpiece and comprise no individual lamellae in a row, or that structures are worked into the interior surface of the segment body (50) so that lamella-like projections are formed on the interior side, in one piece with the segment body (50),
- the segment bodies (50) are received in a substantially circular manner in a housing (12, 14), such that axially adjacent segments partially overlap one another in circumferential direction for the formation of the calibrating aperture (11),
- each segment body (50) is connected to at least one actuating device (20), by means of which the individual segment bodies (50) are retained in the housing (12, 14) and a displacement of each individual segment body (50) is able to be carried out in radial direction and
- that the segment bodies (50) have on the interior side a contour for the formation of the calibrating aperture.

2. A calibrating device for calibrating extruded endless profiles, in particular pipes, with a calibrating aperture (11) which is formed by a plurality of segments arranged circumferentially and axially one behind the other, the interior surfaces of which jointly form the calibrating aperture (11),
**characterized in that**
- the individual segments, arranged axially one behind the other, respectively form a one-piece segment body (50),
- the segment bodies (50) are produced from plastic,
- the segment bodies (50) are received in a substantially circular manner in a housing (12, 14), such that axially adjacent segments partially overlap one another in circumferential direction for the formation of the calibrating aperture (11),
- each segment body (50) is connected to at least one actuating device (20), by means of which the individual segment bodies (50) are retained in the housing (12, 14) and a displacement of each individual segment body (50) is able to be carried out in radial direction,
- the segment bodies (50) are respectively produced from a workpiece, and
- that the segment bodies (50) have on the interior side- a contour for the formation of the calibrating aperture or that on the interior side of the segment bodies contour elements with a contour for the formation of the calibrating aperture are received thereon or therein.

3. The calibrating device according to Claim 1 or 2,
**characterized in that**
the segment bodies (50) are milled from a workpiece.

4. The calibrating device according to Claim 1,
**characterized in that**
the segment bodies (50) are cast from metal and finished.

5. The calibrating device according to Claim 2,
**characterized in that**
the surfaces forming the contour consist of metal, which are inserted into the plastic block.

6. The calibrating device according to Claim 5,
**characterized in that**
metal inserts are configured as lamellae.

7. The calibrating device according to Claim 6,
**characterized in that**
the lamellae are configured in a crescent shape.

8. The calibrating device according to one of Claims 1 to 4,
**characterized in that**
grooves are worked into the segment bodies (50) on the interior side.

9. The calibrating device according to one of Claims 1 to 4,
**characterized in that**
the contours of the segment bodies (50) on the interior side respectively have a smooth surface which presents a curved pipe segment section.

## Revendications

1. Dispositif de calibrage pour le calibrage de profilés sans fin extrudés, en particulier de tubes, comprenant une ouverture de calibrage (11) qui est formée par une pluralité de segments disposés sur le pourtour et adjacents les uns derrière les autres dans le sens axial, dont les surfaces intérieures forment ensemble l'ouverture de calibrage (11), **caractérisé en ce que**
- les différents segments disposés adjacents les uns derrière les autres dans le sens axial forment respectivement un corps de segment d'un seul bloc (50),
- les corps de segment (50) sont fabriqués respectivement à partir d'une pièce à usiner et comprennent des petites amelles individuelles alignées, ou que des structures sont ainsi usinées dans la surface intérieure du corps de segment (50) que des saillies en forme de lamelles sont formées sur l'intérieur, d'un seul bloc avec le corps de segment (50),
- les corps de segment (50) sont ainsi reçus essentiellement en cercle dans un logement (12, 14) que des segments adjacents dans le sens axial se chevauchent partiellement dans le sens périphérique pour former l'ouverture de calibrage (11),
- chaque corps de segment (50) est relié à au moins un dispositif d'actionnement (20) avec lequel les différents corps de segment (50) sont maintenus dans le logement (12, 14) et un déplacement de chaque segment de corps individuel (50) dans le sens radial peut être effectué, et
- que les corps de segment (50) présentent sur l'intérieur un contour pour former l'ouverture de calibrage.

2. Dispositif de calibrage pour le calibrage de profilés sans fin extrudés, en particulier de tubes, comprenant une ouverture de calibrage (11) qui est formée par une pluralité de segments disposés sur le pourtour et adjacents les uns derrière les autres dans le sens axial, dont les surfaces intérieures forment ensemble l'ouverture de calibrage (11), **caractérisé en ce que**
- les différents segments disposés adjacents les uns derrière les autres dans le sens axial forment respectivement un corps de segment d'un seul bloc (50),
- les corps de segment (50) sont fabriqués en plastique,
- les corps de segment (50) sont ainsi reçus essentiellement en cercle dans un logement (12, 14) que des segments adjacents dans le sens axial se chevauchent partiellement dans le sens périphérique pour former l'ouverture de calibrage (11),
- chaque corps de segment (50) est relié à au moins un dispositif d'actionnement (20) avec lequel les différents corps de segment (50) sont maintenus dans le logement (12, 14) et un déplacement de chaque segment de corps individuel (50) dans le sens radial peut être effectué,
- les corps de segment (50) sont fabriqués respectivement à partir d'une pièce à usiner, et
- que les corps de segment (50) présentent sur l'intérieur un contour pour former l'ouverture de calibrage, ou qu'à l'intérieur des corps de segment, des éléments de contour avec un contour pour former l'ouverture de calibrage sont reçus dessus ou dedans.

3. Dispositif de calibrage selon la revendication 1 ou 2,
**caractérisé en ce que**
les corps de segment (50) sont fraisés à partir d'une pièce à usiner.

4. Dispositif de calibrage selon la revendication 1,
**caractérisé en ce que**
les corps de segment (50) sont coulés en métal et usinés ultérieurement.

5. Dispositif de calibrage selon la revendication 2,
**caractérisé en ce que** les surfaces formant le contour sont en métal et sont enchâssées dans le bloc de plastique.

6. Dispositif de calibrage selon la revendication 5,
**caractérisé en ce que** des inserts métalliques sont formés en tant que lamelles.

7. Dispositif de calibrage selon la revendication 6,
**caractérisé en ce que** les lamelles sont conçues en demi-lune.

8. Dispositif de calibrage selon l'une des revendications 1 à 4,
**caractérisé en ce que** des rainures sont usinées à l'intérieur des corps de segment (50).

9. Dispositif de calibrage selon l'une des revendications 1 à 4,
**caractérisé en ce que** les contours intérieurs des corps de segment (50) présentent respectivement une surface lisse qui représente un tronçon de segment de tube bombé.
